# EUROPEAN PATENT SPECIFICATION

(11) **EP 0 822 953 B1**
(45) Date of publication and mention of the grant of the patent: **08.12.1999**
(21) Application number: 96914130.8
(22) Date of filing: 25.04.1996
(51) Int. Cl.: C08G 59/18

(54) **EPOXY RESIN COMPOSITION**
EPOXIDHARZZUSAMMENSETZUNG
COMPOSITION DE RESINE EPOXY

(30) Priority: 28.04.1995 US 431241
(43) Date of publication of application: 11.02.1998
(73) Proprietor: SHELL INTERNATIONALE RESEARCH MAATSCHAPPIJ B.V., 2596 HR Den Haag (NL)
(72) Inventor: GHOSH, Kalyan, Richmond, TX 77469 (US); HUNTER, Joseph, Michael, Houston, TX 77084 (US); MEILUS, Leo, Cypress, TX 77429 (US)
(86) International application number: EP9601746
(87) International publication number: WO9634032

(56) References cited:
- EP-A- 0 085 379
- DATABASE WPI Derwent Publications Ltd., London, GB; AN 92-138016 XP002009864 & JP,A,04 080 228 (MITSUI TOATSU CHEM.) , 13 March 1992
- DATABASE WPI Derwent Publications Ltd., London, GB; AN 79-14693B XP002009865 & JP,A,54 004 992 (JAPAN GEON KK) , 16 January 1979

## Description

The invention relates to new epoxy resin compositions, especially ambient-cure, weatherable coating compositions and a new curing agent.

It is known that cycloaliphatic epoxy resins can be cured to a hard coating which exhibits superior weatherability. The superior weatherability of the cured products makes such epoxy resins potentially useful in civil engineering applications such as industrial maintenance and marine coatings. For such applications, however, properties such as rapid ambient cure, rapid development of hardness, high gloss and film clarity are also important. These properties, however, are only moderate for cycloaliphatic-based epoxy resins. Bisphenol-based epoxy resin compositions exhibit good physical properties and ambient-cure capability when cured with cycloaliphatic amines such as 1,3-bis(amino-methyl)cyclohexane and norbornane diamine which have been modified by dilution in benzyl alcohol, partial adduction with a bisphenol-based epoxy and/or incorporation of accelerators. The weatherability of cured bisphenol based epoxy resin compositions, however, is poor.

It would be desirable to have film-forming epoxy resin compositions which have the weatherability advantages of cycloaliphatic epoxies and exhibit good ambient cure.

According to the invention, a composition is provided comprising (a) a di- or polyglycidyl ether of a cycloaliphatic di- or polyol and (b) an effective amount of a curing agent comprising a 2:1 adduct of a di- or polyglycidyl ether of a cycloaliphatic di- or polyol and a norbornane diamine. The combination of the cycloaliphatic epoxy resin and the adduct curing agent provides a film-forming composition which exhibits good weatherability and ambient curing capability. Preferably the glycidyl ether of steps (a) and (b) is the diglycidyl ether of a cycloaliphatic diol.

The invention composition includes a cycloaliphatic epoxy resin, which includes di- and polyglycidyl ethers having saturated carbon-to-carbon bonds and an average of at least about two vicinal epoxide groups. Such cycloaliphatic epoxy resins can be prepared, for example, by hydrogenating polyglycidyl ethers of di- or polyhydric phenols or by glycidating hydrogenated bisphenols and cycloaliphatic di- or polyols. The preferred cycloaliphatic epoxy resins are the products of glycidating 2,2-bis(4-hydroxycyclohexyl)propane and 1,4-cyclohexanedimethanol, which are available from Shell Chemical Company as EPONEX RESIN 1510 and HELOXY MODIFIER 107, respectively. (EPONEX and HELOXY are trade marks).

The invention composition optionally but preferably (for applications in which long pot life is not critical) includes an acrylate ester having at least three terminal acrylate or methacrylate groups, herein referred to as a (meth)acrylate ester. Such esters include the acrylic and methacrylic acid esters of aliphatic polyhydric alcohols such as the polyacrylates and polymethacrylates of alkylene polyols, alicyclic polyols and higher polyols such a trimethylolethane, trimethylolpropane, pentaerythritol, dipentaerythritol, tripentaerythritol and mixtures thereof. Such acrylate esters include, for example, trimethylolpropane triacrylate, trimethylolethane triacrylate, trimethylolpropane trimethacrylate, pentaerythritol tetraacrylate and dipentaerythritol pentaacrylate. The preferred acrylate for use in the invention compositions is trimethylolpropane triacrylate.

The (meth)acrylate esters are generally present in the composition in an amount within the range of 5 to 40 weight percent, preferably 5 to 20 weight percent, based on the weight of the cycloaliphatic epoxy. They are generally incorporated into the composition as a blend with the epoxy resin. Such a blend is suitably formed by adding the acrylate to the epoxy with gentle stirring at room temperature or slightly elevated temperature (up to about 125 °F (51.7 °C)) for a time effective to produce a homogeneous blend without polymerizing the acrylate.

The invention composition includes an adduct of a cycloaliphatic di- or polyglycidyl ether and a norbornane diamine. The norbornane diamine includes compounds which can be represented by the chemical formula 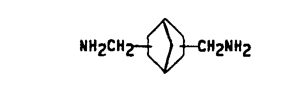 such as 2,5-bis(aminomethyl)bicycloheptane, 2,6-bis-(aminomethyl)bicycloheptane and mixtures thereof.

The adduct is suitably prepared by reacting an excess of the diamine with the di- or polyglycidyl ether under conditions suitable for forming a reaction product in which, on average, two or more moles of amine have reacted with one mole of diglycidyl ether or polyglycidyl ether and the product has active amine hydrogens. The reaction can be carried out at a temperature within the range of 25 to 150 °C, especially 50 to 125 °C. The reaction is suitably carried out by adding a diluent such as benzyl alcohol or an alcohol ethoxylate, heating to about 80 °C, adding the diglycidyl ether, heating to about 120 °C and holding until the acid value of the product stabilizes. The reaction product is then neutralized by addition of an aqueous base such as sodium hydroxide or calcium hydroxide for removal of any hydrochloric acid by-product (from bound chlorine in the diglycidyl ether) and distilling out the water at reduced pressure (40 - 50 mm Hg) at 90 - 120 °C. The product is then filtered to remove by-product salt. The reaction is preferably carried out with an excess of diamine of at least about 4 moles per mole of di- or polyglycidyl ether, preferably 5 to 10 moles per mole of di- or polyglycidyl ether. After completion of the reaction, unreacted diamine can be removed by, for example, vacuum distillation. The adduct can be conveniently maintained and ultimately added to the epoxy resin composition in the diluent in which it was prepared. Typically, the adduct will make up 20 to 50, preferably 30 to 35, weight percent of the combined weight of the diluent and adduct curing agent. The diluent preferably acts as both a carrier of the adduct and as a mild accelerator for the cure reaction.

The adduct will be present in a curing amount in the invention composition. The adduct will generally be present in the composition in an amount within the range of 10 to 35 wt%, based on the weight of the composition. Curing of the composition is carried out by applying the composition as a film to the substrate to be coated and, in applications in which ambient cure is desired, exposing the coating to ambient conditions for a time generally within the range of 2 to 24 hours, preferably 4 to 12 hours.

The invention also relates to the above described 2:1 adduct of a norbornane diamine and a di- or polyglycidyl ether of a cycloaliphatic di- or polyol, as well as to the cured products obtained by curing the compositions according to claims 1 to 8.

The invention compositions are useful as coatings, particularly in such applications as swimming pool deck surfaces and industrial flooring.

### Example 1

### Preparation of Epoxy/Diamine Adduct

To a 2-1, 4-neck flask equipped with a stirrer, thermocouple, condenser, addition funnel, nitrogen sparge and heating mantle, 800 g of norbornane diamine was added. The flask was purged with nitrogen and the contents were heated to 80 °C. Over the next 2.5 hr, 496.8 g of cycloaliphatic epoxy resin (EPONEX 1510 RESIN: diglycidyl ether of hydrogenated BPA having an EEW of about 218) were fed into and mixed with the contents of the flask with constant stirring at 80 °C. The flask contents were periodically sampled for melt viscosity at 175 °F (79.4 °C). At 65 minutes after completion of the cycloaliphatic epoxy resin feed, melt viscosity at 175 °F (79.4 °C) was 830 cP (0.83 Pa.s). At 125 minutes, melt viscosity was 1218 cP (1.218 Pa.s). After 190 minutes, melt viscosity was 1380 cP (1.38 Pa.s). The flask contents were held an additional 90 minutes, cooled and stoppered overnight. The next day, flask contents were reheated to 80 °C and held with stirring under nitrogen. After an additional 135 minutes at 80 °C, melt viscosity was 1953 cP (1.953 Pa.s). The flask contents were then heated to 100 °C and held. After attaining 100 °C, a sample was taken and measured for melt viscosity at 100 °C. A value of 580 cP (0.58 Pa.s) was obtained. After an additional 205 minutes, a sample taken from the flask had melt viscosity of 635 cP (0.635 Pa.s) at 100 °C. After an additional 30 minutes, flask contents had a melt viscosity at 100 °C of 637 cP (0.637 Pa.s) . Flask contents were discharged after an additional 15 minutes. The resulting product was a semi-solid at room temperature and had a Gardner color of less than 1, a melt viscosity at 100 °C of 655 cP (0.655 Pa.s), and a titratable nitrogen content of 10.38%.

### Example 2

### Preparation of Epoxy/diamine Adduct in Benzyl Alcohol

Using the equipment described in Example 1, 400 g of norbornane diamine and 530 g of benzyl alcohol were added to a 2-1 flask. Flask contents were heated to 80 °C with nitrogen purging. 248.4 g of EPONEX 1510 were added to the flask over 90 minutes while maintaining 80-83 °C. After 45 min, a sample was withdrawn and tested S on the Gardner-Holt viscosity scale. The flask contents were heated to 125 °C over 30 min and held at 125 °C for 305 min. A sample then tested X on the Gardner-Holdt viscosity scale. The flask contents were held an additional 80 minutes at 125 °C, cooled to room temperature and stoppered overnight. The next day, flask contents were heated to 125 °C over 70 minutes. After reaching 72 °C (45 min), a sample tested at X on the Gardner-Holdt scale. 20 minutes after reaching 125 °C, the flask contents tested 1.098% for ionic chloride by potentiometric titration. Flask contents were cooled to 100 °C and 28.5 g of 50% aqueous sodium hydroxide were added. 60 min later, a distillation receiver was installed and a vacuum was applied to 27 inches (68.6 cm) in order to distill out water. After 20 min, vacuum was released with nitrogen, and the product was suction filtered to remove formed salts. The resultant product had a Brookfield viscosity at 25 °C of 740 cP (0.74 Pa.s), percent titratable nitrogen of 6.22%, weight per gallon of 8.85 (1.06 kg/l) and a Gardner color of less than one. Alkalinity, as determined by titration of 0.1 normal aqueous hydrochloric acid, was found to be 0.0146 meq/g.

### Example 3

### Preparation of Epoxy/diamine Adduct

Example 2 was repeated except that 13.5 g of 97% calcium hydroxide and 135 g of deionized water were substituted for 28.5 g of 50% sodium hydroxide, the cycloaliphatic epoxy resin was fed in over 75 min, and Gardner-Holdt viscosity measurements were made at 180 and 225 min after reaching 125 °C. A viscosity scale value of X- was obtained after both intervals. Acid value measurements of 16.1 mg potassium hydroxide per gram of sample were obtained at these intervals. The resulting product had a viscosity at 25 °C of 1111 cP (1.111 Pa.s), percent titratable nitrogen of 5.98%, weight per gallon of 8.89 (1.065 kg/l) and a Gardner color of less than one. Acid value was less than 0.1 mg KOH per g of sample.

### Comparative Example 4

### Preparation of Epoxy/diamine Adduct

Example 3 was repeated except that reaction temperature was reduced from 125 °C to 121 °C, 368.7 g of 1,3-bis(aminomethyl)cyclohexane was substituted for 400 g norbornane diamine, and benzyl alcohol was reduced to 504.7 g to keep the concentration at about 45% in the final product. Only acid value was measured in-process. Acid value measurements taken at 45 minute, 105 minute and 165 minute intervals after reaching 121 °C gave values of 13.35, 16.31 and 16.87. The product was a cloudy liquid having a viscosity of 805 (0.805 Pa.s) at 25 °C, a percent titratable nitrogen of 6.32% and a weight per gallon of 8.74 (1.05 kg/l).

### Comparative Example 5

### Preparation of Epoxy/diamine Adduct

Example 4 was repeated except that 352.7 g of metaxylylene diamine was substituted for 368.7 g of 1,3-bis(aminomethyl)cyclohexane and benzyl alcohol was reduced to 491.8 g in order to maintain 45% in the final product. Acid value measurements taken at 65, 105, 165 and 225 minutes gave values of 14.05, 16.29, 17.32 and 17.36. The product was a clear liquid having a viscosity of 706 cP (0.706 Pa.s) at 25 °C, a percent titratable nitrogen of 6.48%, a weight per gallon of 9.06 (1.085 kg/l) and a Gardner color of less than one.

### Comparative Example 6

### Preparation of Epoxy/diamine Adduct

Example 5 was repeated except that 441.6 g of isophorone diamine was substituted for 352.7 g of metaxylylene diamine and benzyl alcohol was increased to 530 g. Acid value samples taken at 60, 120, 175 and 250 minutes after reaching 121 °C were 7.88, 11.26, 11.03, 13.03 and 14.10. The product had a viscosity at 25 °C of 2070 cP (2.07 Pa.s), percent titratable nitrogen of 6.12%, weight per gallon of 8.60 (1.03 kg/l) and Gardner color of less than one.

### Comparative Example 7

### Preparation of Epoxy/diamine Adduct

Example 2 was repeated except that 300 g of 1,4-bis(aminomethyl)cyclohexane (XTA-400 from Huntsman) was used in combination with 411 g of benzyl alcohol, 202.4 g cycloaliphatic epoxy resin, 11.06 g of 97.9% calcium hydroxide and 103.5 g deionized water. Incompatibility appeared at 15 minutes after reaching 125 °C and remained throughout. The product could not be suction-filtered due to plugging.

### Comparative Example 8

### Preparation of Epoxy/diamine Adduct

Example 5 was repeated except that 283.3 g of metaxylylene diamine, 395.4 g of benzyl alcohol, 200 g of cycloaliphatic epoxy resin, 10 g of calcium hydroxide and 100 g of deionized water were used. The product had a viscosity of 595 cP, percent titratable nitrogen of 6.44%, weight per gallon of 9.07 (1.09 kg/l) and Gardner color of less than one.

### Comparative Example 9

### Preparation of Epoxy/diamine Adduct

Example 8 was repeated except that 354.8 g of isphorone diamine, 453.9 g of benzyl alcohol, 200 g of cycloaliphatic epoxy resin and 100 g of deionized water were used. The product had a viscosity of 1190 cP (1.19 Pa.s), percent titratable nitrogen of 5.65%, weight per gallon of 8.61 (1.03 kg/l) and Gardner color of less than one.

### Example 10

### Preparation of Epoxy/diamine Adduct

Example 9 was repeated except that 321 g of norbornane diamine, 426.3 g of benzyl alcohol, 200 g of cycloaliphatic epoxy resin, 10 g of calcium hydroxide and 100 g of deionized water were used. The product had a viscosity of 1230 cP (1.23 Pa.s), percent titratable nitrogen of 6.08%, weight per gallon of 8.92 (1.07 kg/l) and Gardner color of less than one.

### Example 11

### Preparation of Epoxy/diamine Adduct

To a 2-1 flask equipped as in the previous examples was added 321 g of norbornane diamine, 426.3 g of benzyl alcohol, 100 g of deionized water and 10 g of calcium hydroxide. The flask contents were heated to 80 °C under nitrogen purge and 200 g of cycloaliphatic epoxy resin were added over 60 minutes. After an additional reaction period at 80 °C, flask contents were heated to 106 °C over 10 minutes, during which interval sampling and monitoring of acid value was conducted. Acid value was brought to zero by adding additional calcium hydroxide in the amount of 5.19 g. Water was removed by vacuum stripping and the contents were suction filtered. The product had a viscosity of 990 cP (0.99 Pa.s), percent titratable nitrogen of 6.16%, weight per gallon of 8.89 (1.065 kg/l) and a Gardner color of less than one. Infrared plots generated by FTIR revealed no differences in the products of Example 10 and Example 11.

### Example 12

### Evaluation of Epoxy/diamine Adducts

The adducts prepared in Example 3 and Comparative Examples 8 and 9 were mixed with either the same cycloaliphatic epoxy resin or a 90/10 mixture of this resin and trimethylolpropane triacrylate. Mix ratios were calculated assuming one amine hydrogen per epoxide and acrylate. Film properties were measured by drawing down mixtures onto glass plates at a thickness of 0.005 inches (0.127 mm). Films were observed for appearance after curing 24 hours at room temperature. Pencil hardness measurements were taken after curing 24 hours, 48 hours and 7 days at room temperature. In order to measure Shore D hardness, 1/4 inch (0.635 cm) sections were poured into 2-inch (5.08 cm) aluminum diameter cups. Measurements were taken after curing 24 hr, 48 hr and 7 days at room temperature. Light fastness characteristics were determined on films drawn down on aluminum "Q-panels" and cured at schedules of (a) 7 days at room temperature and (b) 24 hr at room temperature plus 2 hours at 100 °C. Panels were exposed to QUV and tested after 7 days. Based on the results, it was concluded that film properties are improved by incorporation of trimethylolpropane triacrylate, although a reduction in hardness was generally evident. Compositions cured with adduct based on metaxylylene diamine (Comparative Example 8) were observed to yellow substantially more than adducts based on either isophorone diamine or norbornane diamine. Rates of hardness development indicate norbornane diamine-based adduct (Example 3) develops hardness substantially faster than isophorone diamine-based adduct (Comparative Example 9).

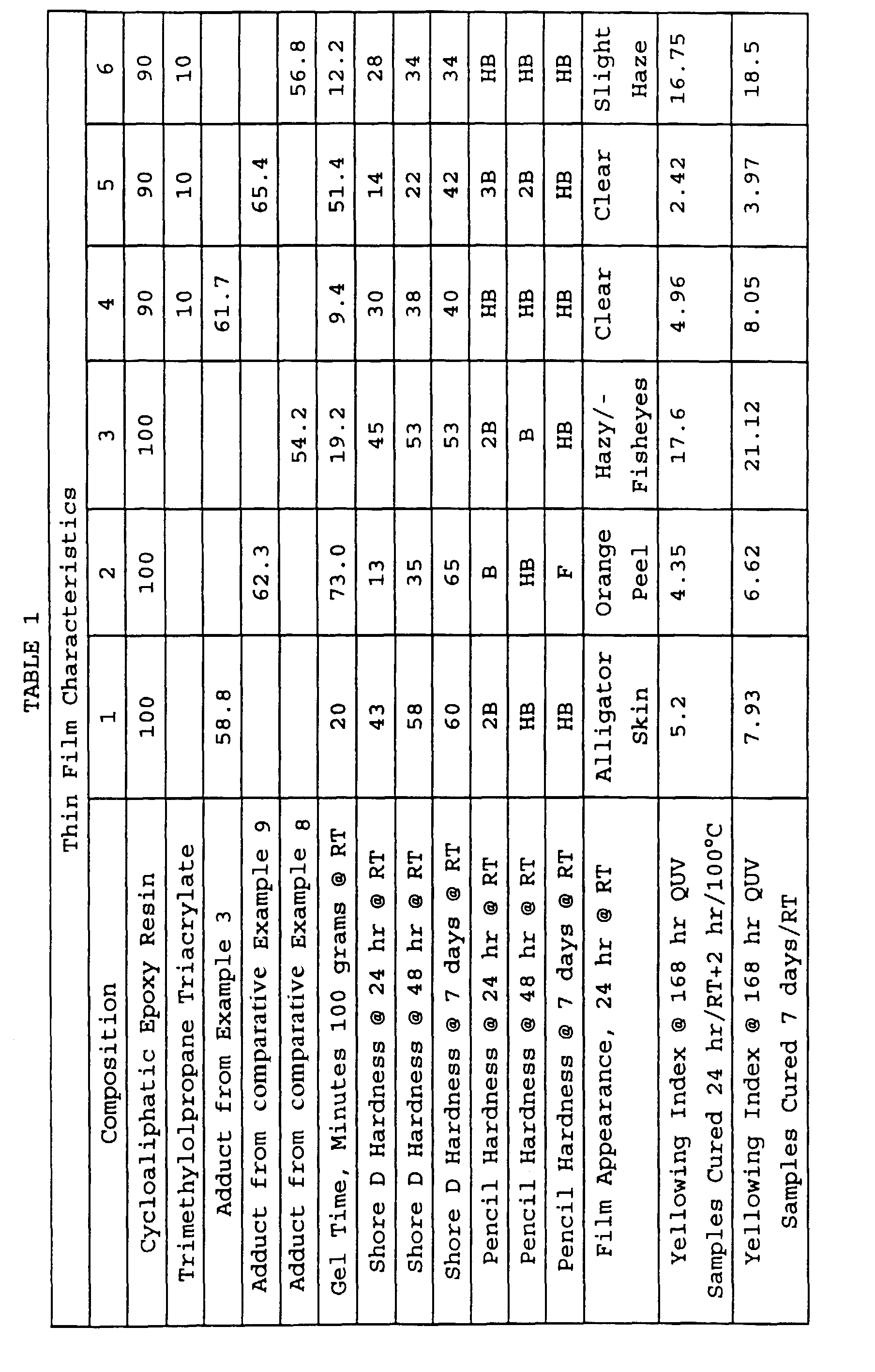

## Claims

1. A composition comprising:
(a) a di- or polyglycidyl ether of a cycloaliphatic di-or polyol; and
(b) a curing amount of a 2:1 adduct of a norbornane diamine and a di- or polyglycidyl ether of a cycloaliphatic di- or polyol.

2. The composition according to claim 1, in which the glycidyl ether of steps (a) and (b) is the diglycidyl ether of a cycloaliphatic diol.

3. The composition of claim 1 which further comprises a diluent for said adduct.

4. The composition of claim 1 in which the glycidyl ether of step (a) is a diglycidyl ether of hydrogenated bisphenol-A or is a diglycidyl ether of cyclohexane dimethanol.

5. The composition of claim 1 in which the glycidyl ether of step (b) is a diglycidyl ether of hydrogenated bisphenol-A or a diglycidyl ether of cyclohexane dimethanol.

6. The composition of claim 1 in which the norbornane diamine is selected from the group consisting of 2,5-bis(amino-methyl)bicycloheptane, 2,6-bis(amino-methyl)bicycloheptane and mixtures thereof.

7. The composition of claim 1 which further comprises a (meth)acrylate ester present in an amount within the range of 5 to 40 weight percent, based on the weight of the diglycidyl ether of step (a).

8. The composition of claim 7 in which the (meth)-acrylate comprises trimethylolpropane triacrylate.

9. A 2:1 adduct of a norbornane diamine and a di- or polyglycidyl ether of a cycloaliphatic di- or polyol.

10. A cured product obtained by curing a composition according to any of claims 1 to 8.

## Patentansprüche

1. Zusammensetzung mit einem Gehalt an
(a) einem Di- oder Polyglycidylether eines cycloaliphatischen Diols oder Polyols; und
(b) einer Härtungsmenge eines 2:1-Addukts aus einem Norbornandiamin und einem Di- oder Polyglycidylether eines cycloaliphatischen Diols oder Polyols.

2. Zusammensetzung nach Anspruch 1, worin der Glycidylether der Stufen (a) und (b) der Diglycidylether eines cycloaliphatischen Diols ist.

3. Zusammensetzung nach Anspruch 1, die weiterhin ein Verdünnungsmittel für das Addukt umfaßt.

4. Zusammensetzung nach Anspruch 1, worin der Glycidylether von Stufe (a) ein Diglycidylether von hydriertem Bisphenol-A oder ein Diglycidylether von Cyclohexandimethanol ist.

5. Zusammensetzung nach Anspruch 1, worin der Glycidylether von Stufe (b) ein Diglycidylether von hydriertem Bisphenol-A oder ein Diglycidylether von Cyclohexandimethanol ist.

6. Zusammensetzung nach Anspruch 1, worin das Norbornandiamin aus der aus 2,5-Bis(aminomethyl)bicycloheptan, 2,6-Bis-(aminomethyl)bicycloheptan und deren Gemischen bestehenden Gruppe ausgewählt ist.

7. Zusammensetzung nach Anspruch 1, die weiterhin einen (Meth)acrylatester umfaßt, der in einer Menge im Bereich von 5 bis 40 Gew.-%, bezogen auf das Gewicht des Diglycidylethers von Stufe (a), zugegen ist.

8. Zusammensetzung nach Anspruch 7, worin das (Meth)acrylat Trimethylolpropantriacrylat umfaßt.

9. Ein 2:1-Addukt aus einem Norbornandiamin und einem Di-oder Polyglycidylether eines cycloaliphatischen Di- oder Polyols.

10. Ein gehärtetes Produkt, erhalten durch Härten einer Zusammensetzung nach einem der Ansprüche 1 bis 8.

## Revendications

1. Composition comprenant :
(a) un éther di- ou polyglycidylique d'un di- ou polyol cycloaliphatique; et
(b) une quantité durcissante d'un produit d'addition 2/1 d'une norbomane diamine et d'un éther di- ou polyglycidylique d'un di- ou polyol cycloaliphatique.

2. Composition suivant la revendication 1, dans laquelle l'éther glycidylique des étapes (a) et (b) est l'éther diglycidylique d'un diol cycloaliphatique.

3. Composition suivant la revendication 1, qui comprend de plus un diluant pour le produit d'addition précité.

4. Composition suivant la revendication 1, dans laquelle l'éther glycidylique de l'étape (a) est un éther diglycidylique de bisphénol-A hydrogéné ou est un éther diglycidylique de cyclohexane diméthanol.

5. Composition suivant la revendication 1, dans laquelle l'éther glycidylique de l'étape (b) est un éther diglycidylique de bisphénol-A hydrogéné ou un éther diglycidylique de cyclohexane diméthanol.

6. Composition suivant la revendication 1, dans laquelle la norbornane diamine est choisie dans le groupe comprenant le 2,5-bis(aminométhyl)bicycloheptane, le 2,6-bis(aminométhyl)bicycloheptane et leurs mélanges.

7. Composition suivant la revendication 1, qui comprend de plus un ester de (méth)acrylate présent en une quantité allant de 5 à 40 % en poids, par rapport au poids de l'éther diglycidylique de l'étape (a).

8. Composition suivant la revendication 7, dans laquelle le (méth)acrylate comprend du triacrylate de triméthylolpropane.

9. Produit d'addition 2/1 d'une norbornane diamine et d'un éther di- ou polyglycidylique d'un di- ou polyol cycloaliphatique.

10. Produit durci obtenu par durcissement d'une composition suivant l'une quelconque des revendications 1 à 8.
